# EUROPEAN PATENT APPLICATION

(11) **EP 3 032 452 A1**
(43) Date of publication of application: **15.06.2016**
(21) Application number: 14306997.9
(22) Date of filing: 11.12.2014
(51) Int. Cl.: G06F 21/60, G06F 21/30, G06F 21/44, G06F 21/62, G06F 9/46

(54) **System for managing access to resources of a first electronic device's application by a second electronic device on a remote server**

(71) Applicant: GEMALTO SA, 92190 Meudon (FR)
(72) Inventor: Phan, Ly Thanh, 92190 Meudon (FR); Tournier, Didier, 92190 Meudon (FR)
(74) Representative: Lotaut, Yacine Diaw

(57) **Abstract**

The present invention relates to a system (SYS) for managing access to resources (Re) of a first application (App1) of a first electronic device (D1) stored on a remote server (RS), said system (SYS) comprising said first electronic device (D1), a second electronic device (D2) comprising a second application (App2) and said remote server (RS) providing services (Sv), wherein:
- said second electronic device (D2) is adapted to:
- receive from said first electronic device (D1) via a secured communication link (Ls) second credentials (Cr2) comprising an identifier (Id1) for said second application (App2) and a derived key (Dk) based on a first credential (Cr1) comprising a master key (Mk1) provided by said remote server (RS) to said first electronic device (D1); and
- send to said remote server (RS) a first access request (Rq1) to access to said resources (Re), said first access request (Rq1) comprising said identifier (Id1);

- said remote server (RS) is adapted to:
- receive from said second electronic device (D2) said first access request (Rq1);
- perform a challenge-response authentication of said second electronic device (D2), said challenge (Ch) being a random or non-predictable number and said response (Rp) comprising a signature (Sg1) computed with said derived key (Dk);
- if said second electronic device (D2) is authenticated, grant access for said second application (App2) of said second electronic device (D2) to said resources (Re).

## Description

### TECHNICAL FIELD

The present invention relates to a system for managing access to resources of a first application of a first electronic device stored on a remote server, said system comprising said first device, a second electronic device comprising a second application and said remote server providing services.

Such system may be used in a non-limitative example for sharing any resources of an application by a plurality of devices.

### BACKGROUND OF THE INVENTION

More and more resources of applications of a first electronic device are stored in a resources holder which is a remote server in order for these resources to be shared with a second device. For example, the resources are multimedia contents such as personal video or personal photos. In order to grant access to the resources of a first device's application for a second user of the second device, the first user of the first electronic device sends to the second user an URL referring to the location on the remote server where the resources may be found. In order for the second user to access these resources, especially those which are marked as private, there must be a registration of said second user on the remote server, said registration usually comprising a user name and a user password. This registration may be performed by the second user himself or by the first user who authorizes the access. As for the resources which are marked as public, there is no need to have any registration for the second user on the remote server.

One problem of this prior art is that the mandatory registration for each second user to access the private resources leads to an overflow of data on the remote server. Said overflow may be useless as some of the registrations may never be used by the second users. Another problem of this prior art is that the URL provided by the first user to a second user may be transferred by said second user to any other users. Said other users may therefore access to the public resources without the first user's knowledge and authorization.

### SUMMARY OF THE INVENTION

It is an object of the invention to provide a system for managing access to resources of a first application of a first electronic device stored on a remote server, said system comprising said first device, a second electronic device comprising a second application and said remote server providing services, which avoids the remote server to store useless user's registrations and which permits the access of the resources of a first application only to dedicated second devices.

To this end, there is provided a system for managing access to resources of a first application of a first electronic device stored on a remote server, said system comprising said first electronic device, a second electronic device comprising a second application and said remote server providing services, wherein:
- said second electronic device is adapted to:
   - receive from said first electronic device via a secured communication link second credentials comprising an identifier for said second application and a derived key based on a first credential comprising a master key provided by said remote server to said first electronic device; and
   - send to said remote server a first access request to access to said resources, said first access request comprising said identifier;
- said remote server is adapted to:
   - receive from said second electronic device said first access request;
   - perform a challenge-response authentication of said second electronic device, said challenge being a random or non-predictable number and said response comprising a signature computed with said derived key;
   - if said second electronic device is authenticated, grant access for said second application of said second electronic device to said resources.

As we will see in further details, there is no need for a second electronic device to perform a registration to the remote server for accessing resources of a first application of a first device. Only an authorized second electronic device may access to said resources, as the first electronic device creates locally second credentials dedicated only for said second device.

According to non-limitative embodiments of the invention, the system in accordance with the invention further comprises the following characteristics.

In a non-limitative embodiment, said remote server is further adapted to check the validity of said identifier and to grant access for said second electronic device to said resources if said identifier is valid.

In a non-limitative embodiment, said first electronic device is adapted to:
- generate said second credentials; and
- send to said second electronic device said second credentials via said secured communication link.

In a non-limitative embodiment,
- said first electronic device is further adapted to:
   - send to said remote server a request for registration to a service;
   - receive from said remote server a registration confirmation, said registration confirmation comprising first credentials, said first credentials comprising said master key and an account identifier;
   - send to said remote server resources associated to said first application after receiving said registration confirmation;
- said remote server is adapted to:
   - receive from said first electronic device said request for registration and send back said registration confirmation;
   - receive from said first electronic device said resources and store said resources.

In a non-limitative embodiment, said first electronic device comprises a first secure element and is further adapted to:
- store said first credentials in said first secure element; and
- generate said second credentials by means of said first secure element; and wherein said second electronic device comprises a second secure element and is further adapted to store the derived key in said second secure element.

In a non-limitative embodiment, the second credentials further comprise entitlements for said second application, and said first access request further comprises said entitlements, and wherein said remote server is further adapted to check the validity of said entitlements.

In a non-limitative embodiment, said remote server is stateless:
- the second electronic device is further adapted to send a second access request comprising the challenge received from said remote server, the response comprising said signature and said identifier;
- the remote server is further adapted to receive said second access request.

In addition, there is provided a remote server providing services and storing resources of a first application of a first electronic device, wherein said remote server is adapted to:
- receive from a second electronic device comprising a second application a first access request to access to said resources, said first access request comprising an identifier for said second application;
- perform a challenge-response authentication of said second electronic device, said challenge being a random or non-predictable number and said response comprising a signature computed with a derived key based on a first credential comprising a master key provided by said remote server to said first electronic device;
- if said second electronic device is authenticated, grant access for said second electronic device to said resources.

According to non-limitative embodiments, the remote server further comprises the following characteristics.

In a non-limitative embodiment, said remote server is further adapted to check the validity of said identifier and to grant access for said second electronic device to said resources if said identifier is valid.

In a non-limitative embodiment, said remote server is further adapted to:
- receive from said first electronic device a request for registration to a service;
- send back a registration confirmation comprising first credentials, said first credentials comprising a master key and an account identifier;
- receive from said first electronic device said resources associated to said first application and store said resources.

In a non-limitative embodiment, said first access request further comprises said entitlements, and said remote server is further adapted to check the validity of said entitlements.

In a non-limitative embodiment, when said remote server is stateless, said remote server is further adapted to receive a second access request comprising the challenge received from said remote server, the response comprising said signature and said identifier.

In addition, there is provided a second electronic device comprising a second application and adapted to access to resources of a first application of a first electronic device, said resources being stored in a remote server providing services, wherein said second electronic device is adapted to:
- receive from said first electronic device via a secured communication link second credentials comprising an identifier for said second application and a derived key based on a first credential comprising a master key provided by said remote server to said first electronic device; and
- send to said remote server a first access request to access to said resources, said first access request comprising said identifier.

In addition, there is provided a first method for managing access to resources of a first application of a first electronic device stored in a remote server for a second application of a second electronic device, said remote server providing services, wherein said first method comprises:
- receiving by means of said second electronic device from said first electronic device via a secured communication link second credentials comprising an identifier for said second application and a derived key based on a first credential comprising a master key provided by said remote server to said first electronic device;
- sending by means of said second electronic device to said remote server a first access request to access to said resources, said first access request comprising said identifier;
- receiving by means of said remote server from said second electronic device said first access request;
- performing by means of said remote server a challenge-response authentication of said second electronic device said challenge being a random or non-predictable number and said response comprising a signature computed with said derived key;
- if said second electronic device is authenticated, granting access by means of said remote server for said second application of said second electronic device to said resources.

In a non-limitative embodiment, said first method further comprises:
- sending by means of said first electronic device to said remote server a request for registration to a service;
- receiving by means of said remote server from said first electronic device said request for registration and sending back a registration confirmation, said registration confirmation comprising first credentials, said first credentials comprising said master key and an account identifier;
- sending by means of said first electronic device to said remote server resources associated to said first application after receiving said registration confirmation;
- receiving by means of said remote server from said first electronic device said resources and storing by means of said remote server said resources.

In addition, there is provided a second method for allowing a second electronic device comprising a second application to access resources of a first application of a first electronic device stored in a remote server, wherein said second method comprises:
- receiving by means of said remote server from said second electronic device a first access request to access to said resources, said first access request comprising an identifier for said second application;
- performing by means of said remote server a challenge-response authentication of said second electronic device, said challenge being a random or non-predictable number and said response comprising a signature computed with a derived key based on a first credential comprising a master key provided by said remote server to said first electronic device;
- if said second electronic device is authenticated, granting access by means of said remote server for said second application of said second electronic device to said resources.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates schematically a non-limitative embodiment of the system for managing access to resources of a first electronic device according to the invention, said system comprising a first device, a second electronic device and a remote server;
- Fig. 2 illustrates schematically a non-limitative embodiment of the system of Fig. 1 and the functionalities of the different elements of said system;
- Fig.3 is a schematic organization chart of the method for managing access to resources of a first application of the first electronic device stored in the remote server of the system of Fig. 1 ;
- Fig.4 is a sequence diagram illustrating the method of Fig. 3 comprising further non-limitative steps; and
- Fig.5 is a schematic organization chart of the method for allowing access of resources of first application of the first electronic device stored in the remote server by the remote server of the system of Fig. 1.

### DESCRIPTION OF EMBODIMENTS OF THE INVENTION

In the following description, well-known functions or constructions by the man skilled in the art are not described in detail since they would obscure the invention in unnecessary detail.

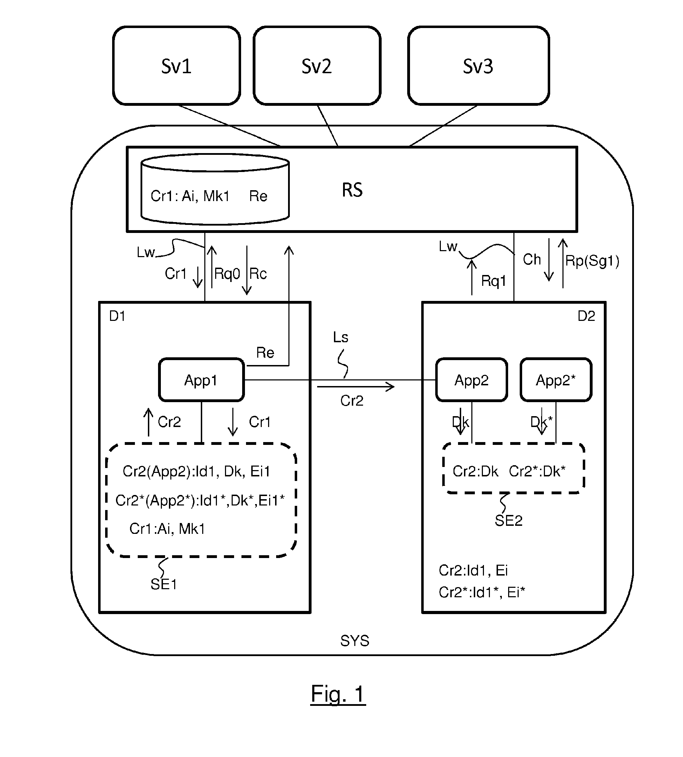

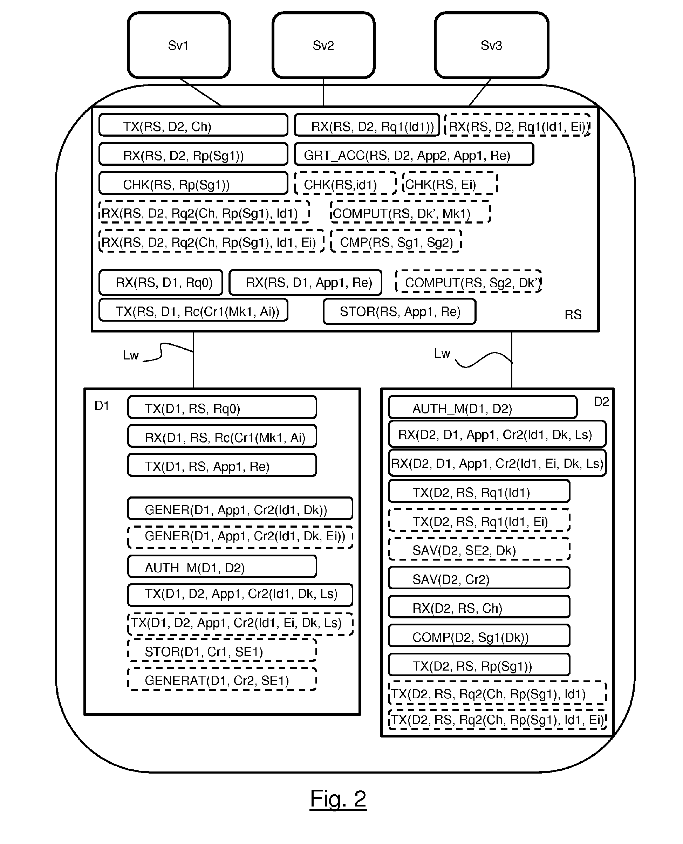

The present invention relates to a system SYS for managing access to resources Re of a first application App1 of a first electronic device D1 stored on a remote server RS. Said system SYS is illustrated in Fig. 1 and the different functionalities of its different elements are illustrated in Fig. 2.

As illustrated in Fig. 1, the system SYS comprises:
- said first electronic device D1;
- said second electronic device D2; and
- said remote server RS which provides services Sv.

In non-limitative embodiment, a first electronic device D1 is a portable device such as a mobile phone, a notebook; a computer; a terminal etc.

In non-limitative embodiment, a second electronic device D2 is a portable device such as a mobile phone, a notebook; a computer; a terminal etc.

For the following, an application is a set of one or more programs designed to carry out operations for a specific application.

The first electronic device D1 is used by a first user U1. The first electronic device D1 comprises at least one first application App1. Usually, it comprises a plurality of first application App1.

The first electronic device D1 also comprises first credentials Cr1 associated to all the first applications App1. Said first credentials Cr1 have been received from the remote server RS during a registration stage (described later). The first credentials Cr1 comprise a master key Mk1 and an account identifier Ai.

A first application App1 of said first electronic device D1 comprises some resources Re which have been stored in the remote server RS. In non-limitative example, the first application App1 is a sharing application and said resources Re are professional data and personal data each comprising some multimedia information such as video, photos, contacts etc.

The second electronic device D2 is used by a second user U2. The second electronic device D2 comprises at least one second application App2. Usually, it comprises a plurality of second application App2.

The second electronic device D2 also comprises second credentials Cr2 associated to a second application App2. For each second application App2, there will be second credentials Cr2. Hence, as illustrated in Fig. 1, the second electronic device comprises two second application App2 and App2*. In a non-limitative example, the second application App2 is a processing photos application and the other second application App2* is a recruiting application.

The remote server RS acts as a cloudsharing server. It permits a first electronic device D1 to access a plurality of services Sv and to store resources Re of a plurality of applications App1 according to said services Sv, and a second electronic device D2 to access via second applications App2 to the resources Re of said first applications.

In non-limitative examples, the remote server RS provides a first service Sv1 which is Facebook®, a second service S2 which is Youtube®, and a third service Sv3 which is Picasa®.

The different elements of the system SYS are described in details hereinafter.

### • Second electronic device D2

The second electronic device D2 is adapted to access resources Re of a first application App1 of the first electronic device D1, said resources Re being stored in a remote server RS providing services Sv.

In order to access the resources Re of the sharing application App1 via the processing photos application App2 of said second electronic device D2, said second electronic device D2 is adapted to:
- receive from said first electronic device D1 via a secure communication link Ls second credentials Cr2 comprising:
   - an identifier Id1 for said second application App2; and
   - a derived key Dk based on a first credential Cr1 comprising a master key Mk1 provided by said remote server RS to said first electronic device D1 (function illustrated in Fig. 2 RX(D2, D1, App1, Cr2(Id1, Dk), Ls); and
- send to said remote server RS a first access request Rq1 to access to said resources Re, said first access request Rq1 comprising said identifier Id1 (function illustrated in Fig. 2 TX(D2, RS, Rq1 (Id1)).

It is to be noted that for each second application App2, there will be a different derived key Dk and a different identifier Id1. Therefore, for each second application App2, there will be different second credentials Cr2. In the non-limitative example of Fig. 1, there are a derived key Dk and an identifier Id1 for the application App2, and there are a different derived key Dk* and a different identifier Id1* for the second application App2*. Therefore, there are second credentials Cr2 for the second application App2 and different second credentials Cr2* for the second application App2*.

As will be described later, a derived key Dk is based on the master key Mk1, on an identifier Id1 and on entitlements Ei if such entitlements are used.

The communication link Ls is a peer-to-peer P2P communication link. In a non-limitative embodiment, it is a short-range communication link.

In non-limitative examples, the communication link Ls a Near Filed Communication NFC, or a Bluetooth® communication, or a WIFI communication, or a P2P SMS communication, or a P2P IMS ("IP Multimedia Subsystem") communication.

It is to be noted that in order for a second electronic device D2 to communicate with the remote server RS, a wide area networked communication channel Lw may be used, such as in non-limitative examples 2G, 3G, LTE, CDMA, WIFI communications. Of course, said communication is secured. In particular, when exchanging the registration confirmation Rc, in non-limitative examples, a SSL tunnel, an encrypted SMS etc. may be used.

In order to have a secure communication link Ls, in a non-limitative embodiment, the second electronic device D2 is adapted to perform a mutual authentication with the first electronic device D1 (function illustrated in Fig. 2 AUTH_M (D1, D2)). Hence, both devices D1, D2 may trust each other to exchange the second credentials Cr2. Mutual authentication being well known by the man skilled in the art, it is not described here.

Thanks to the identifier Id1, the second electronic device D2 will access the resources Re without any registration of the user of said second electronic device D2 in the remote server RS.

The master key MK1 upon which the derived key Dk is based, is stored in the remote server RS and in the first electronic device D1. It performs the link between the first application App1 of the first electronic device D1 and the resources Re stored in the remote server RS. Thanks to the derived key Dk derived from said master key Mk1, the second application App2 of the second electronic device D2 authenticates itself to the remote server RS and access to the corresponding resources Re. The master key Mk1 is used for every first application App1 of the first electronic device D1 as it is related to the user of said first electronic device D1.

The second electronic device D2 is adapted to store the second credentials D2 (function illustrated in Fig. 2 SAV(D2, Cr2). In order to store securely some of the credentials Cr2, in a non-limitative embodiment, the second electronic device D2 comprises a second secure element SE2 and is further adapted to store the derived key Dk in said second secure element SE2 (function illustrated in Fig. 2 SAV(D2, SE2, Dk)).

It is to be noted that the second application App2 of the second electronic device D2 is adapted to communicate with said second secure element SE2.

A secure element is a secured component which comprises a secured chip and may perform cryptographic functionalities and is adapted to store a secret key. In a non-limitative embodiment, the secure element SE is a smart card.

In a non-limitative embodiment, the second credentials Cr2 further comprise entitlements Ei for said second application App2, and said first access request Rq1 further comprises said entitlements Ei.

Said second electronic device D2 is therefore adapted to:
- receive from said first electronic device D1 via a secure communication link Ls second credentials Cr2 comprising:
   - an identifier Id1;
   - entitlements Ei for said second application App2 ; and
   - a derived key Dk based on a first credential Cr1 comprising a master key Mk1 provided by said remote server RS to said first electronic device D1 (function illustrated in Fig. 2 RX(D2, D1, App1, Cr2(Id1, Ei, Dk), Ls); and
- send to said remote server RS a first access request Rq1 to access to said resources Re, said first access request Rq1 comprising said identifier Id1 and said entitlements Ei (function illustrated in Fig. 2 TX(D2, RS, Rq1(Id1, Ei)).

In this way, the granting access is performed for the second electronic device D2 according to said entitlements Ei, that is to say according to what the application App1 has authorized the second application App2 of the second electronic device D2 to access to. The entitlements Ei comprise information that permit the remote server RS to retrieve accessible information for the second application App2.

It is to be noted that entitlements Ei are associated to each second application App2. In the non-limitative example of Fig. 1, entitlements Ei1 are generated and sent by the first electronic device D1 for the second application App2, and entitlement Ei1 * are generated and sent by the first electronic device D1 for the second application App2*.

In non-limitative embodiments, the entitlements Ei may be in the form of an URI, of an XML file, of a JSON object referring to the resources Re stored in said remote server RS which the second electronic device D2 may access to. The URI or XML file comprise for examples, an URL, a content field label etc.

In a non-limitative example, the entitlements Ei for the second application App2 are Facebook^{™}.com/U1/photos/personal.

In a non-limitative example, the entitlements Ei for the second application App2' are Facebook^{™}.com/U1/photos/professional.

In non-limitative embodiments, the entitlements Ei further comprise:
- a validity period associated to the URI;
- a list of the resources Re accessible for the second electronic device D2; for example holidays photos, professional data;
- the type of resources Re accessible for the second electronic device D2; for example the photos, the videos etc;
- a time period from first access;
- a number of accesses to the information.

It is to be noted that when no entitlements Ei are used, there may be preconfigured access rights for all the second applications App2 of the second electronic device D2, such as in a non-limitative example rights to access only to the professional photos if the second electronic device D2 is used as a professional device. This configuration is sent by the first electronic device D1 to the remote server RS when said first electronic device D1 has registered to the remote server RS.

It is to be noted that the derived key Dk is never transmitted to the remote server RS. Hence, there is no possibility for a third party to access fraudulently to said derived key Dk and to the master key Mk1.

When accessing to the remote server RS, there is a challenge-response authentication of said second electronic device D2 by the remote server RS. For said challenge-response authentication, the second electronic device D2 is adapted to:
- receive said challenge Ch from said remote server RS (function illustrated in Fig. 2 RX(D2, RS, Ch));
- compute a signature Sg1 based on said challenge Ch with the derived key Dk corresponding to said first identifier Id1 (function illustrated in Fig. 2 COMPUT(D2, Sg1(Dk))); and
- send back a response Rp comprising said signature Sg1 to said remote server RS for checking (function illustrated in Fig. 2 TX(D2, RS, Rp(Sg1))).

### • Remote server

The remote server RS, which is the resources holder, is adapted to:
- receive from said second electronic device D2 said first access request Rq1 to access to said resources Re, said first request Rq1 comprising said identifier Id1 (function illustrated in Fig. 2 RX(RS, D2, Rq1 (Id1));
- perform a challenge-response authentication of said second electronic device D2 (function illustrated in Fig. 2 TX(RS, D2, Ch))/RX(RS, D2, Rp(Sg1))/ /CHK(RS, Rp(Sg1))), said challenge Ch being a random or non-predictable number and said response Re comprising a signature Sg1 computed with said derived key Dk;
- if said second electronic device D2 is authenticated, grant access for said second application App2 of said second electronic device D2 to said resources Re (function illustrated in Fig. 2 GRT_ACC(RS, D2, App2, App1, Re)).

In a non-limitative embodiment, said remote server RS is further adapted to check the validity of said identifier Id1 (function illustrated in Fig. 2 in dotted-line CHK(RS, Id1)) and to grant access for said second electronic device D2 to said resources Re if said identifier Id1 is valid. This permits to check if there are resources Re of an associated first application App1 in the remote server RS, as the identifier Id1 is based on the account identifier Ai associated to the first user U1 and therefore to the first application App1. Said validity is checked before the challenge-response authentication. This avoids the execution of a challenge-response authentication if this identifier Id1 is not valid.

When entitlements Ei are used, in this non-limitative embodiment, the remote server RS is further adapted to:
- receive from the second electronic device D2 said first access request Rq1 to access to said resources Re, said first request Rq1 comprising said identifier Id1 and said entitlements Ei;
- check the validity of said entitlements Ei (function illustrated in Fig. 2 in dotted-line CHK(RS, Ei)). In this way, the remote server RS verifies if the entitlements Ei refer to resources Re that the remote server RS is managing and that belong to a valid and existing identifier Id1.

Hence, the remote server RS controls access to the different first applications App1 stored resources Re. The remote server RS grants the second application App2 access to the first application App1 resources based on what the first application App1 has authorized the second application App2 to access.

The challenge-response authentication permits the remote server RS to verify that the second electronic device D2 may be trusted.

For performing the challenge-response authentication:
- the remote server RS is adapted to send to said second electronic device D2 the challenge Ch (function illustrated in Fig. 2 TX(RS, D2, Ch));
- receive the corresponding response Rp from said second electronic device D2 (function illustrated in Fig. 2 TX(D2,RS, Rp(Sg1)));
- check said response Rp (function illustrated in Fig. 2 CHK(RS, Rp(Sg1)).

The signature Sg1 within said response Rp is checked by the remote server RS with the corresponding master key Mk1.

It is to be noted that the remote server RS may be stateless (versus stateful), that is to say it uses a stateless protocol to communicate with the second electronic device D2. A stateless protocol is a communication protocol that treats a request independently to any previous request. The remote server doesn't retain the information of the previous requests it has received. Hence, when the remote server RS sends a challenge just upon receiving a first access request Rq1 from said second electronic device D2, it won't retain in memory the challenge Ch it has transmitted.

In this case, when the remote server RS is stateless:
- the remote server RS is further adapted to:
   - receive a second access request Rq2 from said second electronic device D2, said second access request Rq2 comprising the challenge Ch sent, the response Rp with said signature Sg1 and said identifier Id1 (function illustrated in Fig. 2 in dotted lines RX(RS, D2, Rq2(Ch, Rp(Sg1), Id1))).
   - compute a derived key Dk' from the master key Mk1 related to the first identifier Id1 received (function illustrated in Fig. 2 in dotted lines COMPUT(RS, Dk', Mk1));
   - compute a second signature Sg2 with said derived key Dk' computed (function illustrated in Fig. 2 in dotted lines COMPUT(RS, Sg2, Dk'));
   - compare said second signature Sg2 with the first signature Sg1 received (function illustrated in Fig. 2 in dotted lines CMP(RS, Sg1, Sg2));
   - if both signatures Sg1, Sg2 are equal, grant access for said second electronic device D2 to the first content information I1 of the first application App1 of said first electronic device D1.

In a non-limitative embodiment, when the entitlements Ei are used,
- the remote server RS is further adapted to:
   - receive a second access request Rq2 from said second electronic device D2, said second access request Rq2 comprising the challenge Ch sent, the response Rp with said signature Sg1 and said identifier Id1, and said entitlements Ei (function illustrated RX(RS, D2, Rq2(Ch, Sg1), Id1, Ei));
   - compute said derived key Dk' from the master key Mk1 related to the first identifier Id1 and to the entitlements Ei received (function illustrated COMP(RS, Dk', Mk1)).

As described before, the first credentials Ai and Mk1 stored in the first electronic device D1 are created during a registration stage of said first electronic device D1 on said remote server RS. During said registration stage, the resources Re of the application App1 are stored in said remote server RS.

Hence, for the registration of a first user U1 and therefore of the first electronic device D1, the remote server RS is adapted to:
- receive from said first electronic device D1 a request for registration Rq to a service Sv (function illustrated in Fig. 2 RX(RS, D1, Rq0));
- send back a registration confirmation Rc, said registration confirmation Rc comprising first credentials Cr1, said first credentials Cr1 comprising said master key Mk1 and an account identifier Ai (function illustrated in Fig. 2 TX(RS, D1, Rc(Cr1 (Mk1, Ai));
- receive from said first electronic device D1 the resources Re associated to said application App1 (function illustrated in Fig. 2 RX(RS, D1, App1, Re)) and store said resources Re (function illustrated in Fig. 2 STOR(RS, App1, Re)).

A registration confirmation Rc means that the remote server RS has created an account for the user U1 of said first application App1.

The account identifier Ai created by the remote server RS performs a link with said first electronic device D1, more particularly with the user of said first electronic device D1 and the master key Mk1 permits the first electronic device D1 to create locally the second credentials Cr2 and to provide them to a second electronic device D2. Hence, the first electronic device D1 may share the resources Re of a first application App1 on said remote server RS. Moreover, the account identifier Ai and the master key Mk1 permit the remote server RS to verify the identity of a registered user U1. Hence, for each user U1, there will be a different pair of account identifier Ai-master key Mk1 associated in the remote server RS. And a first electronic device D1 used by a first user U1 comprises a different pair of account identifier Ai-master key Mk1 than another first electronic device D1 used by another first user U1.

In a non-limitative embodiment, the request for registration Rq0 comprises:
- a user name;
- a postal address;
- a phone number.

When receiving said request registration Rq, the remote server RS creates an account for said user U1 and associates an account identifier Ai. The account identifier Ai and the master key Mk1 related to that user U1 are therefore associated to the first electronic device D1 of said user U1, as they are stored in its memory.

### • First electronic device D1

The second credentials Cr2 associated to said application App1 are provided by the first electronic device D1. Therefore the first electronic device D1 is adapted to:
- generate second credentials Cr2 (function illustrated in Fig. 2 GENER(D1, App1, Cr2(Id1, Dk))); and
- send to said second electronic device D2 said second credentials Cr2 via said secure communication link Ls (function illustrated in Fig. 2 TX(D1, D2, App1, Cr2(Id1, Dk), Ls)).

It is to be reminded that the second credentials Cr2 comprise at least an identifier Id1 and a derived key Dk.

It is to be reminded that different second credentials Cr2 are generated for each second application App2. Hence, a second application App2 has dedicated second credentials Cr2.

When entitlements Ei are used in a non-limitative embodiment, the first electronic device D1 is adapted to:
- generate second credentials Cr2 comprising entitlement Ei for said second application App2 (function illustrated in Fig. 2 in dotted lines GENER(D1, App1, Cr2(Id1, Ei, Dk))); and
- send to said second electronic device D2 said second credentials Cr2 via said secure communication link Ls (function illustrated in Fig. 2 in dotted lines TX(D1, D2, App1, Cr2(Id1, Ei, Dk, Ls)).

In particular, the first electronic device D1 generates a different identifier Id1 for a second application App2 of each different device D2, or for different second application App2 of the same second electronic device D2. In the example illustrated, the first electronic device D1 generates a first identifier Id1 via its first sharing application App1 for the processing application App2 of a user U2 using a second electronic device D2, and a second identifier Id1* via its first sharing application App1 for the recruiting application App2* of another user U2* using another second electronic device D2. Such unique identifier Id1 for a second application App2 permits a first application App1 to easily revoked access authorization to the second application App2 to the stored first application's resources without affecting other second applications App2.

The same applied when entitlements Ei are used. There are two different entitlements Ei1, Ei1*, one set for each second application App2, App2*. Therefore, a user of a first electronic device D1 may share different resources Re of its sharing application App1 with different users of second devices D2 or for different second applications of a same second electronic device D2.

In non-limitative embodiment, said identifier Id1 is based on the account identifier Ai and a unique identifier UID.

As described above, the account identifier Ai is associated to the user U1 of the first electronic device D1. Said account identifier Ai will be used for said first application App1 to store its resources Re on the remote server RS and will be used by the remote server RS to retrieve the corresponding master key Mk1. The unique identifier UID may be in non-limitative examples a random number or an increasing index, ensuring that none of the identifiers Id1 generated are identical. The UID is locally generated in D1.

In order to store securely some of the credentials Cr1 in a non-limitative embodiment, the first electronic device D1 comprises a first secure element SE1.

The first electronic device D1 is further adapted to:
- store said first credentials Cr1 in said first secure element SE1 (function illustrated in Fig. 2 in dotted lines STOR(D1, Cr1, SE1)).

Moreover, the first electronic device D1 is further adapted to:
- generate said second credentials Cr2 by means of said first secure element SE1 (function illustrated in Fig. 2 in dotted lines GENERAT(D1, Cr2, SE1)).

In particular, the secure element SE1 computes the derived key Dk which is a derivation of the master key Mk1.

The derivation of the master key Mk1 includes the identifier Id1 and when entitlements are used, said entitlements Ei. Hence, the derived key Dk is based at least on said master key Mk1 and on an identifier Id1.

In a first non-limitative embodiment, the computation of the derived key Dk is a hash of the master key Mk1, of said identifier Id1 and of said entitlements Ei (when these entitlements Ei are used).

In a second non-limitative embodiment, the computation of the derived key Dk is a triple DES algorithm using the identifier Id1 and the entitlements Ei (when these are used) as the triple DES data, and the master key Mk1 as the triple DES key.

It is to be noted that the first application App1 of the first electronic device D1 is able to communicate with said first secure element SE1.

For the registration phase described above, the first electronic device D1 is further adapted to:
- send to a remote server RS a request for registration Rq0 to a service Sv (function illustrated in Fig. 2 TX(D1, RS, Rq0));
- receive from said remote server RS a registration confirmation Rc, said registration confirmation Rc comprising first credentials Cr1, said first credentials Cr1 comprising said master key Mk1 and the account identifier Ai (function illustrated in Fig. 2 RX(D1, RS, Rc(Cr1 (Mk1; Ai)));
- send to said remote server RS resources Re associated to said application App1 after receiving said registration confirmation Rc (function illustrated in Fig. 2 TX(D1, RS, App1, Re)).

It is to be noted that in order for a first electronic device D1 to communicate with the remote server RS, wide area networked communication may be used, such as in non-limitative examples 2G, 3G, LTE, CDMA, WIFI communications. Of course, said communication is secured. In particular, when exchanging the registration confirmation Rc, in non-limitative examples, a SSL tunnel, an encrypted SMS etc. may be used.

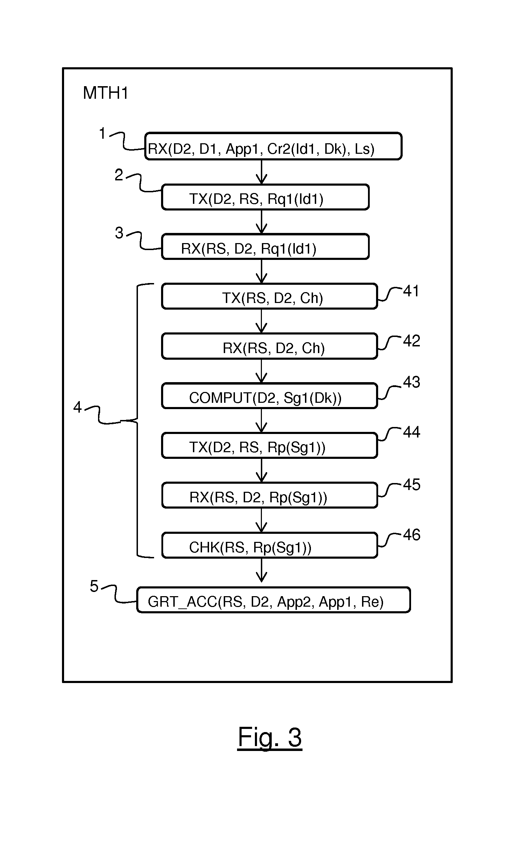

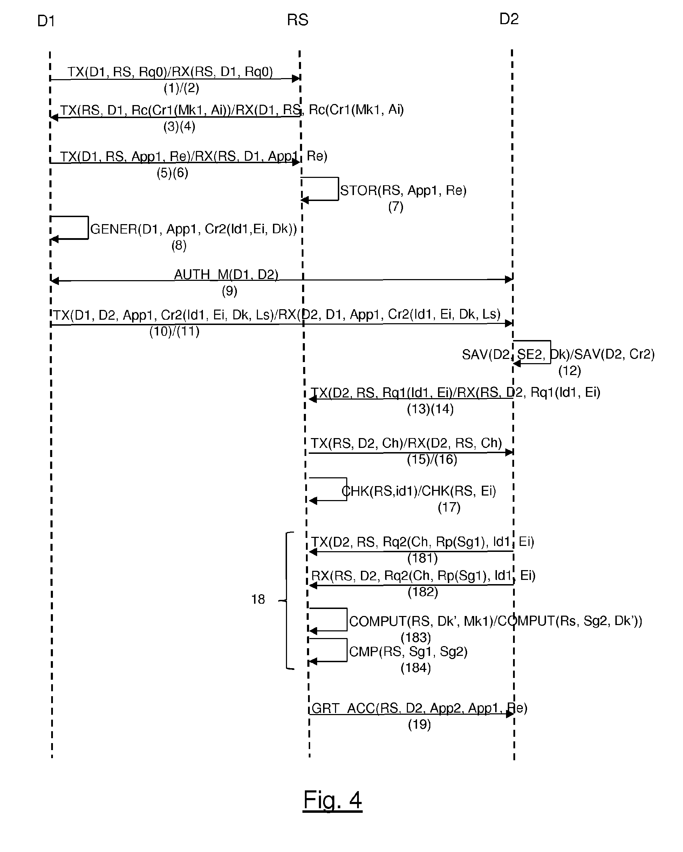

Hence, the system SYS described carries out a first method MTH1 for managing access to resources Re of a first device's D1 application App1 stored in a remote server RS for a second application App2 of a second electronic device D2. Said method MTH1 is a signature based on derived credential method and is illustrated in Fig. 3 and Fig. 4.

As will be described in details hereinafter, the first electronic device D1 provides the second credentials Cr2 via its application App1 to the second electronic device D2 via a peer-to-peer communication channel Ls; the second electronic device D2 uses the received second credentials Cr2 to authenticate itself to the remote server RS and to access the resources of the application App1 stored in said remote server RS.

As illustrated in Fig. 3, **in step 1)**, the second electronic device D2 receives from said first electronic device D1 via a secure communication link Ls second credentials Cr2 comprising an identifier Id1 for said second application App2 and a derived key Dk based on a first credential Cr1 comprising a master key Mk1 provided by said remote server RS to said first electronic device D1.

**In step 2)**, the second electronic device D2 sends to said remote server RS a first access request Rq1 to access to said resources Re, said first access request Rq1 comprising said identifier Id1.

**In step 3)**, the remote server RS receives from said second electronic device D2 said first access request Rq1.

**In step 4)**, the remote server RS performs a challenge-response authentication of said second electronic device D2, said challenge Ch being a random or non-predictable number and said response Rp comprising a signature Sg1 computed with said derived key Dk.

**In sub-step 41)**, the remote server RS sends to said second electronic device D2 the challenge Ch which receives it **in sub-step 42)**.

**In sub-step 43)**, the second electronic device D2 computes a signature Sg1 based on said challenge Ch with the derived key Dk corresponding to said first identifier Id1.

**In sub-step 44)**, the second electronic device D2 sends back a response Rp comprising said signature Sg1 to said remote server RS for checking, and the remote server RS receives said response Rp **in sub-step 45)**.

**In sub-step 46)**, the remote server RS checks said response Rp.

**In step 5)**, if the second electronic device D2 is authenticated, the remote server RS grants access for said second application App2 of said second electronic device D2 to said resources Re.

In a non-limitative embodiment, the first electronic device D1 generates the second credentials Cr2 via its first application App1. Hence, the method MTH1 further comprises the computation of said second credentials by said first electronic device D1.

In a non-limitative embodiment, the first user U1 registers to the remote server RS via the application App1 of the first electronic device D1 in order to store the resources Re of said first application App1. Hence, the method MTH1 further comprises the registration phase of the first user U1 via the application App1 of its first electronic device D1. Said first application App1 provides user's information to register to the service Sv chosen of the remote server RS.

In a non-limitative embodiment, the first electronic device D1 and the second electronic device D2 comprise respectively a first secure element SE1 and a second secure element SE2.

In a non-limitative embodiment, the remote server RS is further adapted to check the validity of said identifier Id1 and to grant access for said second electronic device D2 to said resources Re if said identifier Id1 is valid.

In a non-limitative embodiment, the second credentials Cr2 further comprise entitlements Ei for said second application App2, and said first access request Rq1 further comprises said entitlements Ei, and said remote server RS is further adapted to check the validity of said entitlements Ei.

In a non-limitative embodiment, the remote server RS is stateless.

Fig. 4 illustrates the method MTH1 with the generation stage and the registration stage and the non-limitative embodiments above mentioned.

**In step 1)**, the first electronic device D1 sends to said remote server RS a request for registration Rq0 to a service Sv, for example to the service Sv3 Picasa®.

**In step 2)**, the remote server RS receives said request for registration Rq0 and **in step 3)** sends back a registration confirmation Rc, said registration confirmation Rc comprising first credentials Cr1, said first credentials Cr1 comprising said master key Mk1 and an account identifier Ai. **In step 4)**, said first electronic device D1 receives said registration confirmation Rc.

**In step 5)**, said first electronic device D1 sends to said remote server RS resources Re associated to said first application App1 after receiving said registration confirmation Rc.

**In step 6)**, said remote server RS receives from said first electronic device D1 said resources Re and **in step 7)** stores said resources Re.

**In step 8)**, said first electronic device D1 generates second credentials Cr2. In the given example, said second credentials Cr2 comprises a specific derived key Dk, an identifier Id1 and entitlements Ei1 dedicated to the photos processing application App2 for second electronic device D2 of the user U2. The second credentials Cr2 are securely generated by means of the first secure element SE1.

When the first electronic device D1 wants to give access to the resources Re of said first application D1, in a non-limitative embodiment, **in step 9)**, said first electronic device D1 performs a mutual authentication with said second electronic device D2 to establish a secure communication link Ls.

**In step 10)**, said first electronic device D1 sends to said second electronic device D2 said second credentials Cr2 via said secure communication link Ls. Said second electronic device D2 receives said second credentials Cr2 **in step 11)**.

**In step 12)**, the second electronic device D2 stores said second credentials Cr2 associated with said photos process application App2 in memory (for the identifier Id1 and the entitlements Ei) and in its secure element SE2 (for the derived key Dk).

It is to be noted that the generation stage of the second credentials Cr2 is performed after the registration stage of the first electronic device D1, It may be performed when the first electronic device D1 is still connected with the remote server RS, but not necessarily. Indeed, it may be performed when the communication between the first electronic device D1 and the remote server RS is shut-down. For example a first user will transfer its personal video or photos on Youtube® or Facebook®. Then, the first user may send an URL to the second user via an SMS for example and when his first electronic device D1 is not anymore connected to the remote server RS.

When the second electronic device D2 wants to access the resources Re of said first electronic device D1, the following steps are performed.

**In step 13)**, the second electronic device D2 sends to said remote server RS a first access request Rq1 to access to said resources Re, said first access request Rq1 comprising said identifier Id1 and said entitlements Ei received from the first electronic device D1.

**In step 14)**, the remote server RS receives from said second electronic device D2 said first access request Rq1.

**In step 15)**, the remote server RS transmits a challenge Ch to the second electronic device D2 which receives it **in step 16)**. As the remote server RS is stateless, while transmitting said challenge, it returns an error message (not illustrated).

**In step 17)**, the remote server RS is further adapted to check the validity of said identifier Id1 and of said entitlements Ei. If said identifier Id1 and said entitlements Ei are valid, the further steps are performed, otherwise the access to the resources Re is refused for the second application App2 (not illustrated).

**In step 18)**, the remote server RS performs a challenge-response authentication of said second electronic device D2, said challenge Ch being a random or non-predictable number and said response Rp comprising a signature Sg1 computed with said derived key Dk.

As the remote server RS is stateless, the following sub-steps are performed. **In a first sub-step 181)**, the second electronic device D2 sends a second access request Rq2 comprising the challenge Ch previously received from said remote server RS, the response Rp comprising said signature Sg1 and said identifier Id1. **In a second sub-step 182)**, the remote server RS receives said second access request Rq2. **In a third sub-step 183),** the remote server RS computes a derived key Dk' from the master key Mk1 related to the first identifier Id1 received and the remote server RS computes a second signature Sg2 with said derived key Dk' computed. **In a fourth sub-step 184)**, the remote server RS compares said second signature Sg2 with the first signature Sg1 received. if both signatures Sg1, Sg2 are equal, the second electronic device D2 is authenticated.

**In step 19)**, if said second electronic device D2 is authenticated (and if said identifier Id1 and of said entitlements Ei are valid), the remote server RS grant access for said second application App2 of said second electronic device D2 to said resources Re.

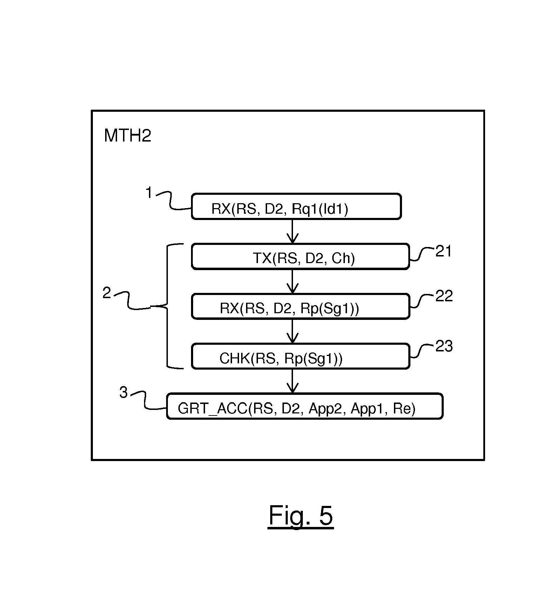

As illustrated in Fig. 5, the remote server RS carries out a second method MTH2 for allowing a second application App2 to access resources Re of a first application App1 of a first electronic device D1 stored in a remote server RS. Said method is a signature verification based on derived credential method. Said method MTH2 comprises:
- receiving by means of said remote server RS from said second electronic device D2 a first access request Rq1 to access to said resources Re, said first access request Rq1 comprising an identifier Id1 for said second application App2 (function illustrated in Fig. 4 RX(RS, D2, Rq1 (Id1));
- performing by means of said remote server RS a challenge-response authentication of said second electronic device D2, said challenge Ch being a random or non-predictable number and said response Rp comprising a signature Sg1 computed with a derived key Dk based on a first credential Cr1 comprising a master key Mk1 provided by said remote server RS to said first electronic device D1 (function illustrated in Fig. 4 TX(RS, D2, Ch))/RX(RS, D2, Rp(Sg1))/CHK(RS, Rp(Sg1)));
- if said second electronic device D2 is authenticated, granting access by means of said remote server RS for said second application App2 of said second electronic device D2 to said resources Re (function illustrated in Fig. 4 GRT_ACC(RS, D2, App2, App1, Re).

It is to be understood that the present invention is not limited to the aforementioned embodiments and variations and modifications may be made without departing from the scope of the invention. In the respect, the following remarks are made.

Hence, some embodiments of the invention may comprise one or a plurality of the following advantages:
- it is easy to implement;
- it permits a first application App1 to locally provide a second application App2 with the access rights (entitlements) to access the first application's resources stored on a remote server. The access is controlled by means of the entitlements;
- it permits a remote server RS to dynamically verify the identity provided by the first application App1 of the second application App2 (via the credentials Cr1 provided by the first electronic device D1) requesting to access the first application's resources. This leads to more security;
- it permits to send only derived credentials (the identifier Id1 is derived from the account identifier Ai) when a new second application App2 tries to access a first application App1 resources Re; this leads to more security;
- it permits a remote server to only grant access to the resources authorized by the first application App1;
- it avoids the user of a second electronic device D2 to register to a remote server to access the first application's resources on said remote server. Only the first electronic device D1 needs to register;
- it permits a user of a second electronic device D2 to preserve its anonymity while accessing contents on the remote server;
- to access private resources, it avoids a user of a first electronic device D1 to create a new account (username/password) on said remote server that it will send to the targeted user using a second electronic device D2 for said user to access to the first application resources Re. The remote server RS doesn't store user accounts that are not used. The remote server RS only store active user's accounts/credentials;
- entitlements dedicated to a second specific application App2 of a specific second electronic device D2 may not be copied (contrary to a classic non-searchable URL) and sent to other second applications App2 of other second devices D2 without the consent of the owner of the resources Re; the owner of the resources Re stored in the remote server RS knows exactly which user of a second electronic device D2 has access to his first application's resources;
- a second application App2 may not provide access rights it got from the first application App1 to another second application App2, as the identifier Id1 is unique for one second application App2;
- the user of a first electronic device D1 is certain that a user of a second electronic device D2 may not provide the second credentials to another user;
- it permits the first application App1 to simply provide access rights to the second application App2 by establishing a peer-to-peer communication;
- a revocation of an access authorization for a second application App2 to the stored first application resources Re is performed for a specific user of a second electronic device D2 contrary to a classic non-searchable URL which revocation will concern all the users who have received the link.

## Claims

1. A system (SYS) for managing access to resources (Re) of a first application (App1) of a first electronic device (D1) stored on a remote server (RS), said system (SYS) comprising said first electronic device (D1), a second electronic device (D2) comprising a second application (App2) and said remote server (RS) providing services (Sv), wherein:
- said second electronic device (D2) is adapted to:
- receive from said first electronic device (D1) via a secured communication link (Ls) second credentials (Cr2) comprising an identifier (Id1) for said second application (App2) and a derived key (Dk) based on a first credential (Cr1) comprising a master key (Mk1) provided by said remote server (RS) to said first electronic device (D1); and
- send to said remote server (RS) a first access request (Rq1) to access to said resources (Re), said first access request (Rq1) comprising said identifier (Id1);
- said remote server (RS) is adapted to:
- receive from said second electronic device (D2) said first access request (Rq1);
- perform a challenge-response authentication of said second electronic device (D2), said challenge (Ch) being a random or non-predictable number and said response (Rp) comprising a signature (Sg1) computed with said derived key (Dk);
- if said second electronic device (D2) is authenticated, grant access for said second application (App2) of said second electronic device (D2) to said resources (Re).

2. A system (SYS) according to claim 1, wherein said remote server (RS) is further adapted to check the validity of said identifier (Id1) and to grant access for said second electronic device (D2) to said resources (Re) if said identifier (Id1) is valid.

3. A system (SYS) according to claim 1 or 2, wherein:
- said first electronic device (D1) is adapted to:
- generate said second credentials (Cr2); and
- send to said second electronic device (D2) said second credentials (Cr2) via said secured communication link (Ls).

4. A system (SYS) according to any one of the previous claims 1 to 3, wherein:
- said first electronic device (D1) is further adapted to:
- send to said remote server (RS) a request for registration (Rq) to a service (Sv);
- receive from said remote server (RS) a registration confirmation (Rc), said registration confirmation (Rc) comprising first credentials (Cr1), said first credentials (Cr1) comprising said master key (Mk) and an account identifier (Ai);
- send to said remote server (RS) resources (Re) associated to said first application (App1) after receiving said registration confirmation (Rc);
- said remote server (RS) is adapted to:
- receive from said first electronic device (D1) said request for registration (Rq) and send back said registration confirmation (Rc);
- receive from said first electronic device (D1) said resources (Re) and store said resources (Re).

5. A system (SYS) according to any one of the previous claims 1 to 4, wherein said first electronic device (D1) comprises a first secure element (SE1) and is further adapted to:
- store said first credentials (Cr1) in said first secure element (SE1); and
- generate said second credentials (Cr2) by means of said first secure element (SE1);
and wherein said second electronic device (D2) comprises a second secure element (SE2) and is further adapted to store the derived key (Dk) in said second secure element (SE2).

6. A system (SYS) according to any one of the previous claims 1 to 5, wherein the second credentials (Cr2) further comprise entitlements (Ei) for said second application (App2), and wherein said first access request (Rq1) further comprises said entitlements (Ei), and wherein said remote server (RS) is further adapted to check the validity of said entitlements (Ei).

7. A system (SYS) according to any one of the previous claims 1 to 6, wherein when said remote server (RS) is stateless:
- the second electronic device (D2) is further adapted to send a second access request (Rq2) comprising the challenge (Ch) received from said remote server (RS), the response (Rp) comprising said signature (Sg1) and said identifier (Id1);
- the remote server (RS) is further adapted to receive said second access request (Rq2).

8. Remote server (RS) providing services (Sv) and storing resources (Re) of a first application (App1) of a first electronic device (D1), wherein said remote server (RS) is adapted to:
- receive from a second electronic device (D2) comprising a second application (App2) a first access request (Rq1) to access to said resources (Re), said first access request (Rq1) comprising an identifier (Id1) for said second application (App2);
- perform a challenge-response authentication of said second electronic device (D2), said challenge (Ch) being a random or non-predictable number and said response (Rp) comprising a signature (Sg1) computed with a derived key (Dk) based on a first credential (Cr1) comprising a master key (Mk1) provided by said remote server (RS) to said first electronic device (D1);
- if said second electronic device (D2) is authenticated, grant access for said second electronic device (D2) to said resources (Re).

9. Remote server (RS) according to claim 8, wherein said remote server (RS) is further adapted to check the validity of said identifier (Id1) and to grant access for said second electronic device (D2) to said resources (Re) if said identifier (Id1) is valid.

10. Remote server (RS) according to claim 8 or claim 9, wherein said remote server (RS) is further adapted to:
- receive from said first electronic device (D1) a request for registration (Rq) to a service (Sv);
- send back a registration confirmation (Rc) comprising first credentials (Cr1), said first credentials (Cr1) comprising a master key (Mk) and an account identifier (Ai);
- receive from said first electronic device (D1) said resources (Re) associated to said first application (App1) and store said resources (Re).

11. Remote server (RS) according to any one of the previous claims 8 to 10, wherein said first access request (Rq1) further comprises said entitlements (Ei), and wherein said remote server (RS) is further adapted to check the validity of said entitlements (Ei).

12. Remote server (RS) according to any one of the previous claims 8 to 11, wherein when said remote server (RS) is stateless, said remote server (RS) is further adapted to receive a second access request (Rq2) comprising the challenge (Ch) received from said remote server (RS), the response (Rp) comprising said signature (Sg1) and said identifier (Id1).

13. Second electronic device (D2) comprising a second application (App2) and adapted to access to resources (Re) of a first application (App1) of a first electronic device (D1), said resources (Re) being stored in a remote server (RS) providing services (Sv), wherein said second electronic device (D2) is adapted to:
- receive from said first electronic device (D1) via a secured communication link (Ls) second credentials (Cr2) comprising an identifier (Id1) for said second application (App2) and a derived key (Dk) based on a first credential (Cr1) comprising a master key (Mk1) provided by said remote server (RS) to said first electronic device (D1); and
- send to said remote server (RS) a first access request (Rq1) to access to said resources (Re), said first access request (Rq1) comprising said identifier (Id1).

14. First method (MTH1) for managing access to resources (Re) of a first application (App1) of a first electronic device (D1) stored in a remote server (RS) for a second application (App2) of a second electronic device (D2), said remote server (RS) providing services (Sv), wherein said first method comprises:
- receiving by means of said second electronic device (D2) from said first electronic device (D1) via a secured communication link (Ls) second credentials (Cr2) comprising an identifier (Id1) for said second application (App2) and a derived key (Dk) based on a first credential (Cr1) comprising a master key (Mk1) provided by said remote server (RS) to said first electronic device (D1);
- sending by means of said second electronic device (D2) to said remote server (RS) a first access request (Rq1) to access to said resources (Re), said first access request (Rq1) comprising said identifier (Id1);
- receiving by means of said remote server (RS) from said second electronic device (D2) said first access request (Rq1);
- performing by means of said remote server (RS) a challenge-response authentication of said second electronic device (D2) said challenge (Ch) being a random or non-predictable number and said response (Rp) comprising a signature (Sg1) computed with said derived key (Dk);
- if said second electronic device (D2) is authenticated, granting access by means of said remote server (RS) for said second application (App2) of said second electronic device (D2) to said resources (Re).

15. Second method (MTH2) for allowing a second electronic device (D2) comprising a second application (App2) to access resources (Re) of a first application (App1) of a first electronic device (D1) stored in a remote server (RS), wherein said second method comprises:
- receiving by means of said remote server (RS) from said second electronic device (D2) a first access request (Rq1) to access to said resources (Re), said first access request (Rq1) comprising an identifier (Id1) for said second application (App2);
- performing by means of said remote server (RS) a challenge-response authentication of said second electronic device (D2), said challenge (Ch) being a random or non-predictable number and said response (Rp) comprising a signature (Sg1) computed with a derived key (Dk) based on a first credential (Cr1) comprising a master key (Mk1) provided by said remote server (RS) to said first electronic device (D1);
- if said second electronic device (D2) is authenticated, granting access by means of said remote server (RS) for said second application (App2) of said second electronic device (D2) to said resources (Re).
